(19) Europäisches Patentamt / European Patent Office / Office européen des brevets

(11) **EP 3 336 362 A1**

(12) **EUROPEAN PATENT APPLICATION**

(43) Date of publication:
20.06.2018 Bulletin 2018/25

(51) Int Cl.:
*F04D 29/42* (2006.01)   *F04D 29/44* (2006.01)
*F04D 29/68* (2006.01)   *F04D 17/10* (2006.01)

(21) Application number: 17206662.3

(22) Date of filing: 12.12.2017

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD TN

(30) Priority: 14.12.2016 JP 2016242396

(71) Applicant: Kabushiki Kaisha Toyota Jidoshokki
Kariya-shi, Aichi-ken 448-8671 (JP)

(72) Inventors:
• Matsuda, Masaaki
  Kariya-shi, Aichi-ken,, 448-8671 (JP)

• Watanabe, Yoshikiyo
  Kariya-shi, Aichi-ken,, 448-8671 (JP)
• Oda, Tsutomu
  Kariya-shi, Aichi-ken,, 448-8671 (JP)
• Ishino, Minoru
  Nagakute-shi, Aichi-ken,, 480-1192 (JP)
• Iwakiri, Yuuji
  Nagakute-shi, Aichi-ken,, 480-1192 (JP)

(74) Representative: Winter, Brandl, Fürniss, Hübner,
Röss, Kaiser, Polte - Partnerschaft mbB
Patent- und Rechtsanwaltskanzlei
Alois-Steinecker-Strasse 22
85354 Freising (DE)

(54) **CENTRIFUGAL COMPRESSOR AND TURBOCHARGER**

(57)      A centrifugal compressor includes a rotary blade (36) that is rotatable around an axis (C1) and that is configured to compress gas that flows in an axial direction to the rotary blade (36) and that flows gas outwardly in a radial direction of the axis (C1), an inlet part (60) that extends in the axial direction, that forms an inlet passage (52, 66, 68) to introduce gas to the rotary blade (36), and that includes a circular cross section and, a projecting part (82) that projects from a part of a circumferential wall surface of the inlet passage (52, 66, 68). A top end (84A) of the projecting part (82) is located within an inflow region (F) through which gas flows to the rotary blade (36). An inclined surface (84) of the projecting part (82) is formed to be inclined so that the top end (84A) is located downstream in a rotation direction of the rotary blade (36) relative to a base end (84B) of the projecting part (82).

FIG. 1

**Description**

BACKGROUND OF THE DISCLOSURE

The present disclosure relates to a centrifugal compressor and a turbocharger.

Japanese Patent Application Publication No. 2015-105644 mentions a compressor (centrifugal compressor) for a supercharger, which has rotatable rotary blades for compressing air and an intake duct through which air is introduced to the rotary blades. A flat flow straightening plate is disposed in the intake duct and is positioned such that the plate surfaces of the flow straightening plate face the radial direction of the rotation axis of the rotary blades.

Some implementations described herein provide a centrifugal compressor and a turbocharger that reduce surging and have a higher compressor efficiency as compared with a centrifugal compressor and a turbocharger in which the flow straightening plate is disposed in the inlet passage through which gas is introduced to the impeller in such a position that when the flow straightening plate is seen in the axial direction of the rotary blades, the flow straightening plate passes through the rotation center of the rotary blades and the plate surfaces of the flow straightening plate face in the radial direction of the rotary blades.

SUMMARY OF THE DISCLOSURE

In accordance with an aspect of the present disclosure, there is provided a centrifugal compressor including a rotary blade that is rotatable around an axis and that is configured to compress gas that flows in an axial direction of the rotary blade and that flows outwardly in a radial direction of the axis, an inlet part that extends in the axial direction, that forms an inlet passage to introduce gas to the rotary blade, and that includes a circular cross section and, a projecting part that projects from a part of a circumferential wall surface of the inlet passage. A top end of the projecting part is located within an inflow region through which gas flows to the rotary blade, and wherein an inclined surface of the projecting part is formed to be inclined so that the top end of the projecting part is located downstream in a rotation direction of the rotary blade relative to a base end of the projecting part.

Other aspects and advantages of the present disclosure will become apparent from the following description, taken in conjunction with the accompanying drawings, illustrating by way of example the principles of the present disclosure.

BRIEF DESCRIPTION OF THE DRAWINGS

The present disclosure together with objects and advantages thereof, may best be understood by reference to the following description of the embodiments together with the accompanying drawings in which:

FIG. 1 is a front view of a centrifugal compressor according to a first embodiment of the present disclosure;

FIG. 2 is a sectional view of the centrifugal compressor of FIG. 1;

FIGS. 3A is a schematic views showing the flow of air in the centrifugal compressor of FIG. 1;

FIGS. 3B is a schematic views showing the flow of air in a comparative centrifugal compressor;

FIG. 4 is a fragmentary perspective view of an impeller of the centrifugal compressor of FIG. 1;

FIG. 5 is a perspective cutaway view showing an inlet part and a flow straightening plate of the centrifugal compressor of FIG. 1;

FIG. 6 is a graph illustrating an evaluation result of the centrifugal compressors according to the first embodiment of the present disclosure and the centrifugal compressor for comparison;

FIG. 7 is a graph illustrating another evaluation result of the centrifugal compressors according to the first embodiment of the present disclosure and the centrifugal compressor for comparison;

FIG. 8 is a sectional view of the turbocharger of FIG. 1;

FIG. 9 is a front view of the comparative centrifugal compressor used for comparison with the centrifugal compressor of FIG. 1;

FIG. 10 is a sectional view of the centrifugal compressor of FIG. 9;

FIG.11 is a front view of another comparative centrifugal compressor used for comparison with the centrifugal compressor of FIG. 1;

FIG. 12 is a sectional view of the centrifugal compressor of FIG. 11;

FIG. 13 is a perspective cutaway view showing illustrating an inlet part and a flow straightening plate of the centrifugal compressor of FIG. 11.

FIG. 14 is a front view of a centrifugal compressor according to a second embodiment of the present disclosure;

FIG. 15 is a front view of a centrifugal compressor according to a third embodiment of the present disclosure;

FIG. 16 is a front view of a centrifugal compressor according to a fourth embodiment of the present disclosure; and

FIG. 17 is a front view of a centrifugal compressor according to a fifth embodiment of the present disclosure.

DETAILED DESCRIPTION OF THE EMBODIMENTS

First embodiment

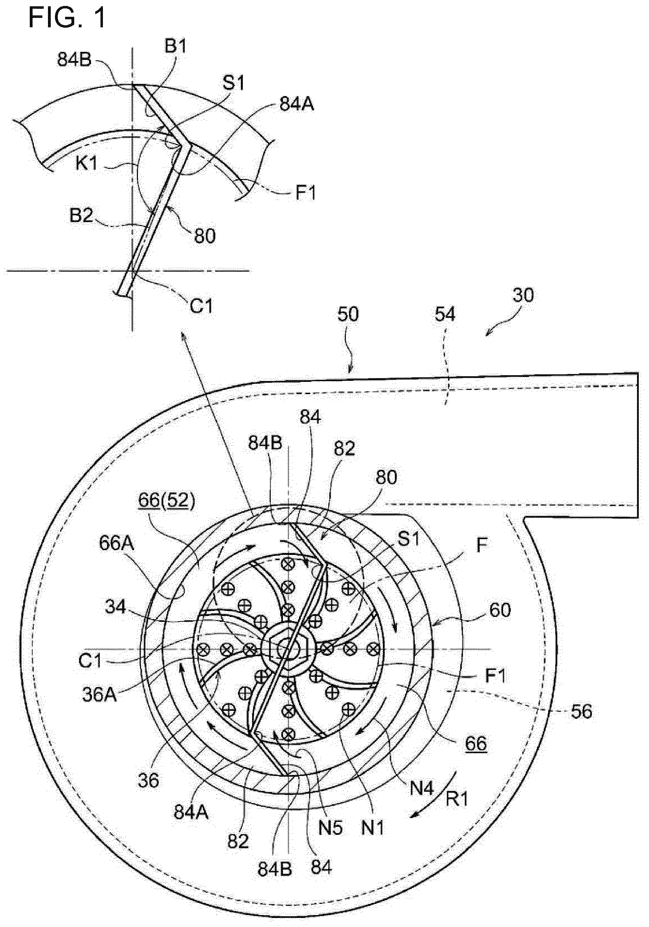

The following will describe a centrifugal compressor and a turbocharger according to a first embodiment of the present disclosure with reference to FIGS. 1 to 13.

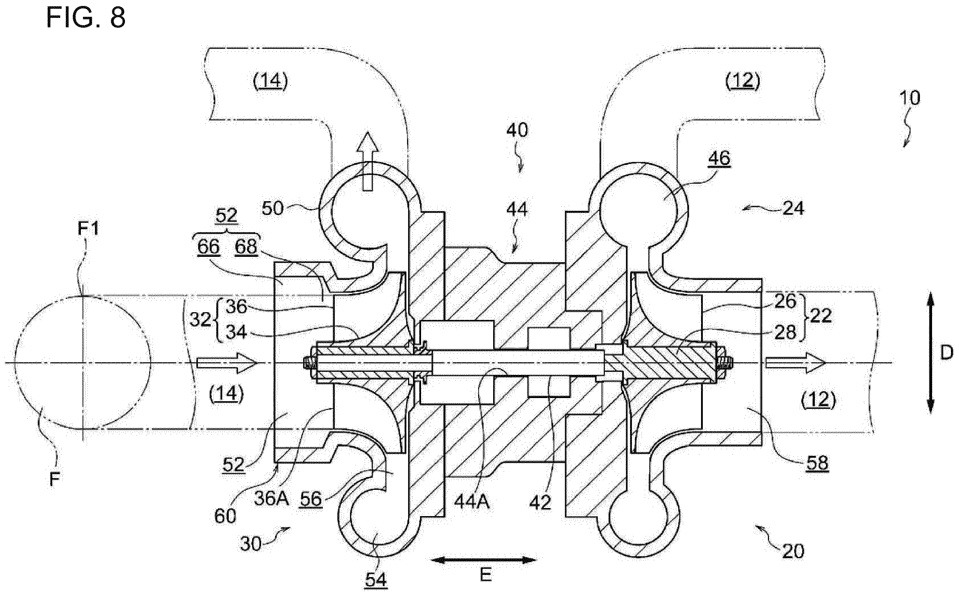

FIG. 8 depicts a turbocharger 10 according to the first embodiment of the present disclosure. The turbocharger 10 includes a turbine unit 20, a centrifugal compressor 30, and a connecting unit 40 that connects the turbine unit 20 and the centrifugal compressor 30. The turbine unit 20 is disposed midway in an exhaust passage 12 of an engine (not shown). The centrifugal compressor 30 is disposed midway in an intake passage 14 of the engine.

The turbine unit 20 includes a housing 24. The centrifugal compressor 30 includes a housing 50. The connecting unit 40 includes a housing 44 connecting the housing 24 and the housing 50.

The turbocharger 10 further includes a rotary shaft 42 that is inserted through the housings 24, 44, 50. The housings 24, 44, 50 are arranged in this order from one end to the other end of the rotary shaft 42 or in the axial direction of the rotary shaft 42 (the direction indicated by the double-headed arrow E in FIG. 8, the direction hereinafter simply being referred to as the axial direction). A fastener (not shown) affixes the housings 24, 44, 50 with each other.

As shown in FIG. 8, the centrifugal compressor 30 includes the housing 50 and an impeller 32. The housing 50 has therein a space in which the impeller 32 is disposed. The impeller 32 includes a rotary shaft part 34 fixed on the rotary shaft 42 at the other end side thereof in the axial direction and a plurality of impeller blades 36 extending from the rotary shaft part 34.

The housing 50 includes an introduction passage 52 that is located outwardly from the impeller 32 in the axial direction of the impeller 32 (on the opposite side of the housing 44) and allows air (or another type of gas) in the intake passage 14 to flow to the impeller 32. The housing 50 also includes a spiral passage 54 (e.g., a scroll passage) that is located outwardly from the impeller 32 in the radial direction of the rotary shaft 42 (the direction of the double-headed arrow D in FIG. 8, the direction hereinafter simply referred to as the radial direction) and through which air flows outside of the housing 50 and discharges in the intake passage 14.

The structure of the centrifugal compressor 30 will be described in more detail elsewhere herein.

As further shown in FIG. 8, the connecting unit 40 includes the housing 44 that has a support portion 44A supporting the rotary shaft 42.

The housing 44 has an inlet port (not shown) through which engine oil supplied to the support portion 44A flows in the housing 44, and an outlet (not shown) through which the engine oil is discharged from the housing 44.

In the structure described above, the engine oil that flows in the housing 44 is supplied to the support portion 44A to permit an increase in smoothness of rotation of the rotary shaft 42.

As further shown in FIG. 8, the turbine unit 20 includes the housing 24 and a turbine rotor 22. The housing 24 has a space in which the turbine rotor 22 is disposed. The turbine rotor 22 includes a rotor hub 28 connected to one end of the rotary shaft 42 in the axial direction, and includes a plurality of turbine blades 26 extending from outwardly from the rotor hub 28 in the radial direction.

A scroll passage 46 is formed outwardly from the turbine rotor 22 in the radial direction in the housing 24 (the direction away from the rotation center C1 of the rotary shaft 42). Exhaust gas (or another type of gas or liquid) that has flowed through the exhaust passage 12 flows through the scroll passage 46 in the housing 24. A discharge passage 58 is formed in the housing 24 outwardly from the turbine rotor 22 in the axial direction (on the opposite side of the housing 44). Exhaust gas flows through the discharge passage 58 outwardly from the housing 24 and is discharged into the exhaust passage 12.

The following will describe the operation of the turbocharger 10.

The turbine blades 26 are driven by exhaust gas flowing from the scroll passage 46 of the housing 24, such that the turbine rotor 22 is rotated. The rotation of the turbine rotor 22 is transmitted to the impeller 32 via the rotary shaft 42. The exhaust gas that has rotated the turbine rotor 22 in the housing 24 is discharged through the discharge passage 58 into the exhaust passage 12.

The rotation of the turbine rotor 22 is transmitted via the rotary shaft 42 to rotate the impeller 32. The rotation of the impeller 32 compresses air introduced through the intake passage 14 and the introduction passage 52. The compressed air flows outwardly in the radial direction. Then, the compressed air flows outwardly in the radial direction, flows through the spiral passage 54, and is discharged to the intake passage 14. The compressed air, that is discharged from the spiral passage 54, is supplied to the engine as compressed air for combustion.

The following will describe the centrifugal compressor 30.

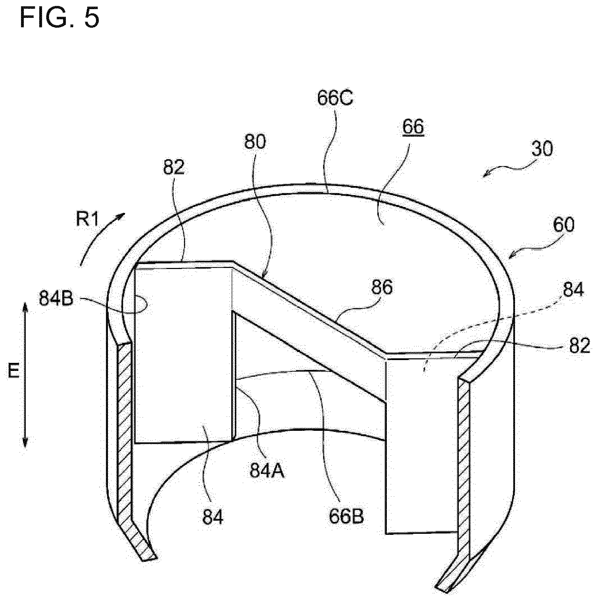

As further shown in FIG. 8, the centrifugal compressor 30 includes a flow straightening plate 80 (FIGS. 1 and 5) disposed in the housing 50, includes the housing 50, and includes the impeller 32 disposed in the housing 50.

As described above, the impeller 32 includes the rotary shaft part 34 and a plurality of impeller blades 36. The bases of the impeller blades 36 are connected to the rotary shaft part 34. The impeller blade 36 is one example of the rotary blade of the present disclosure.

The rotary shaft part 34 is formed so that the diameter of the rotary shaft part 34 is gradually reduced as the rotary shaft 34 extends outwardly in the axial direction (on the opposite side of the housing 44).

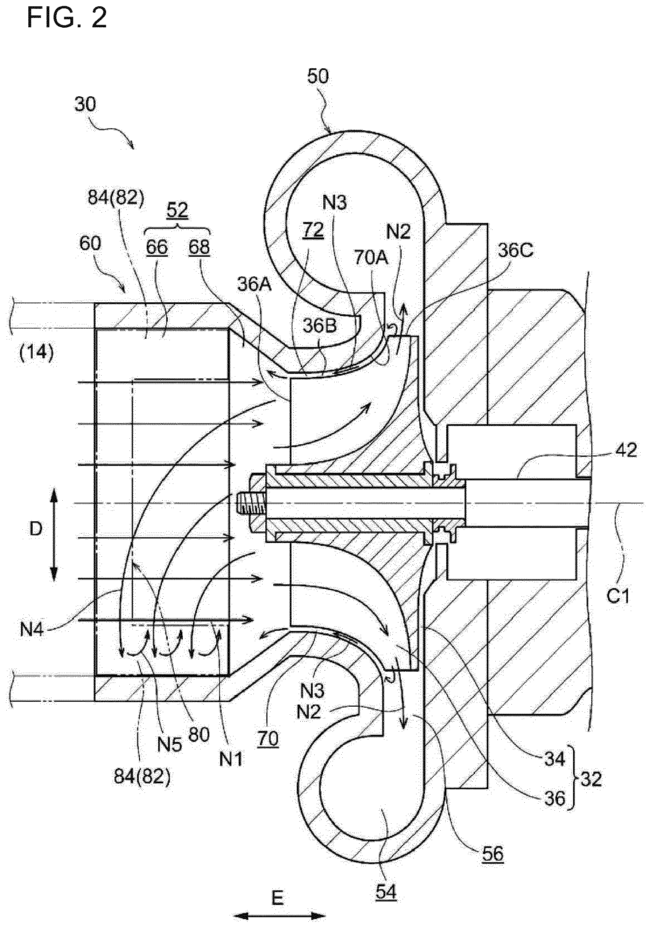

Referring to FIG. 1, each impeller blade 36 has a curved shape and extends outwardly from the rotary shaft part 34 in the radial direction. Referring to FIG. 2, the impeller blade 36 has a leading edge 36A facing outwardly in the axial direction on the top end side of the impeller blade 36 (on the air-upstream side) and a curved edge 36B that is connected to the end portion of the leading edge 36A and curves towards the base of the impeller blade 36. Each impeller blade 36 also has a base edge 36C that is connected to the end portion of the curved edge 36B and is formed so that the end surface of the base edge 36C faces outwardly in the radial direction (in the direction away from the rotation center C1 of the rotary shaft 42).

In the structure described above, the rotating impeller 32 compresses air introduced from the side of the leading edge 36A of the impeller blade 36 to the impeller blades 36, and the compressed air flows outwardly from the base edges 36C of the impeller blades 36 in the radial direction.

As shown in FIG. 2, the housing 50 includes a compression passage 70 in which the impeller 32 is disposed, includes a diffusion passage 56, includes the introduction passage 52 through which air, that flows through the intake passage 14, is introduced to the impeller 32, and includes the spiral passage 54 having a spiral shape.

The compression passage 70 is formed so as to surround the curved edges 36B of the impeller blades 36 from the outside in the radial direction. A clearance 72 is formed between a wall surface 70A forming the compression passage 70 and the curved edge 36B of the impeller blades 36.

The diffusion passage 56 is formed so as to surround the base edges 36C of the impeller blades 36 from the outside in the radial direction (FIG. 1). The air that is compressed by the rotating impeller 32 and that flows outwardly in the radial direction is introduced through the diffusion passage 56 to the spiral passage 54.

The spiral passage 54 is formed so as to surround the diffusion passage 56 from the outside in the radial direction (FIG. 1). The cross section of the diffusion passage 56 has a circular shape.

The introduction passage 52 is formed in an inlet part 60 of the housing 50 and located outwardly from the impeller 32 in the axial direction. In other words, the introduction passage 52 formed in the inlet part 60 is configured to introduce air to the impeller blades 36.

As shown in FIG. 1, the introduction passage 52 is formed so as to surround the leading edge 36A of the impeller blades 36 as seen in the axial direction and extends in the axial direction. As shown in FIG. 2, the introduction passage 52 is formed on the side of the impeller blades 36 and includes a funnel-shaped passage 68. The funnel-shaped passage 68 includes a cross section that increases outwardly in the axial direction, and includes an inlet passage 66 having a cylindrical shape and that extends from the funnel-shaped passage 68 outwardly in the axial direction. Specifically, the inlet passage 66 has a cylindrical shape. The center of the inlet passage 66 coincides with the rotation center C1 of the rotary shaft 42 (hereinafter referred to as the rotation center C1). That is, the introduction passage 52 has a circular cross section.

As shown in FIGS. 1 and 8, the area of the inlet passage 66 is larger than an inflow region F through which air flows to the impeller blades 36 as seen in the axial direction. The inflow region F through which airflows to the impeller blades 36 (hereinafter referred to as the inflow region F) corresponds to the area within a circle described by the leading edge 36A of the rotating impeller blades 36 (the inflow region F shown in FIGS. 1 and 8).

As shown in FIGS. 1 and 5, the flow straightening plate 80 includes a plate shape is disposed in the inlet passage 66 and is formed integrally with the inlet part 60. The flow straightening plate 80 extends in the axial direction. The flow straightening plate 80 has plate surfaces extending along the axial direction. The flow straightening plate 80 includes a pair of projecting parts 82 (e.g., paired projecting parts 82), and includes a connecting part 86 connecting the paired projecting parts 82.

As shown in FIG. 1, the paired projecting parts 82 are disposed on opposite sides of the connecting part 86 with respect to the rotation center C1 as seen in the axial direction, and project from a part of the inner circumferential wall surface 66A of the inlet passage 66. When the projecting part 82 is viewed in the axial direction, an inclined surface 84 is formed in the projecting part 82 and is inclined so that a top end 84A of the projecting part 82 is located downstream in the rotation direction (clock-wise direction or direction of the arrow R1) of the impeller 32 (impeller blades 36) relative to a base end 84B of the projecting part 82. The top end 84A of the inclined surface 84 is located within the inflow region F. In the present embodiment, the top end 84A is continuous with a circumferential edge F1 of the inflow region F as seen in the axial direction.

As shown in FIGS. 2 and 5, each inclined surface 84 has a rectangular shape. Each inclined surface 84 is formed in the axial direction from one end 66B to the other end 66C of the inlet passage 66. The one end 66B and the other end 66C correspond to a first end and a second end of the present disclosure, respectively.

The connecting part 86 is formed so as to connect the projecting parts 82 at the outer end portions thereof. The dimension of the connecting part 86 as measured in the axial direction is shorter than that of the projecting part 82. For example, the axial dimension of the connecting part 86 is about one fourth of that of the projecting part 82.

Referring to FIG. 1, B1 designates a line segment between the radially outer base end 84B of the inclined surface 84 and the intersection S1 between the outer circumferential edge F1 of the inflow region F and the inclined surface 84. In the present embodiment, the intersection S1 corresponds to the top end 84A. B2 designates a line segment that connects the intersection S1 and the rotation center C1. In the present embodiment, the angle K1 that is formed by the line segments B1 and B2 is 126°.

In the present embodiment, although the angle K1 formed by the line segments B1 and B2 is 126° as seen in the axial direction, the angle K1 may be greater than or equal to 90° and less than 180°.

While the top end 84A of the inclined surface 84 is contiguous with the circumferential edge F1 of the inflow region F as seen in the axial direction, the top end 84A of the inclined surface 84 may be located within the inflow region F. When the top end 84A of the inclined surface 84 is located within the inflow region F and the distance from the base end 84B to the intersection between the circumferential edge F1 of the inflow region F and the inclined surface 84 is expressed as 100°, the distance from the base end 84B to the top end 84A of the inclined surface 84 may be less than or equal to 120°.

The following will describe the operation of the centrifugal compressor 30 according to the first embodiment as compared with a centrifugal compressor 100 as a first comparative example and another centrifugal compressor 120 as a second comparative example. First, the structure of the centrifugal compressors 100, 120 will be described. Then, the operation of the centrifugal compressors 100, 120, and 30 will be described in this order. It is to be noted that the description of the comparative centrifugal compressors 100, 120 will focus only on the structure that is different from that of the centrifugal compressor 30.

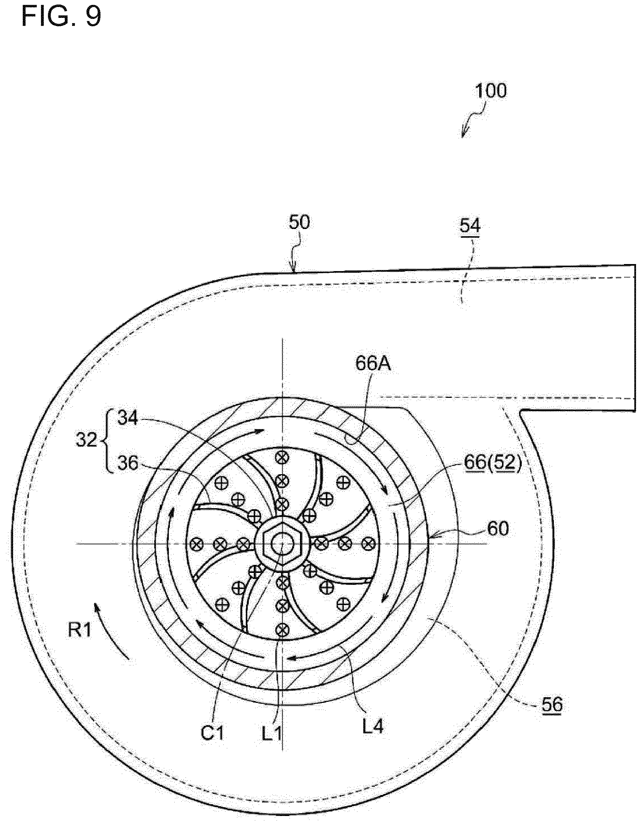

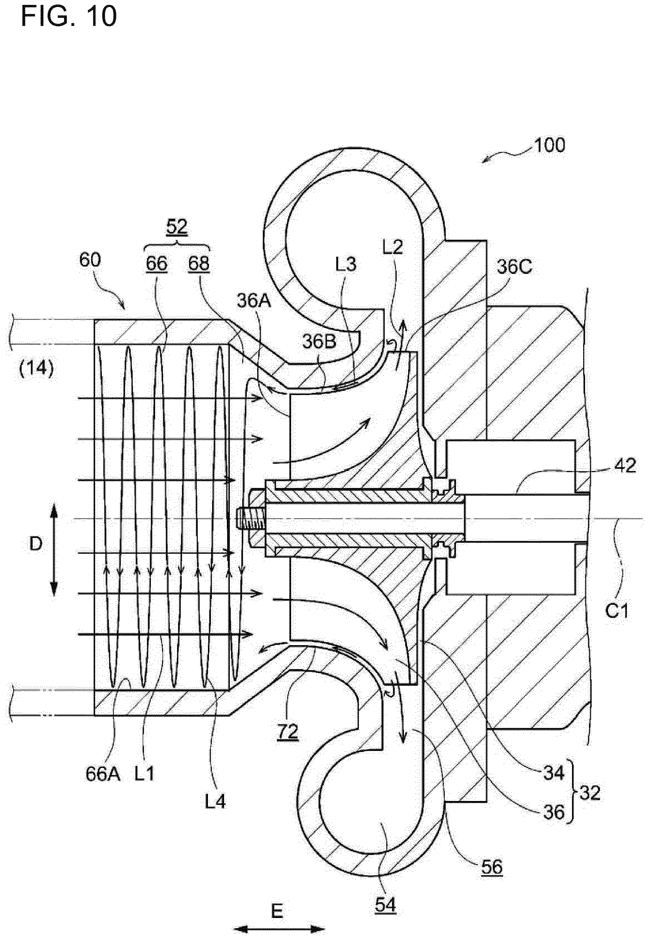

Referring to FIGS. 9 and 10 showing the centrifugal compressor 100, no flow straightening plate is provided in the inlet passage 66 of the centrifugal compressor 100. The rest of the structure of the centrifugal compressor 100 is substantially the same as that of the centrifugal compressor 30.

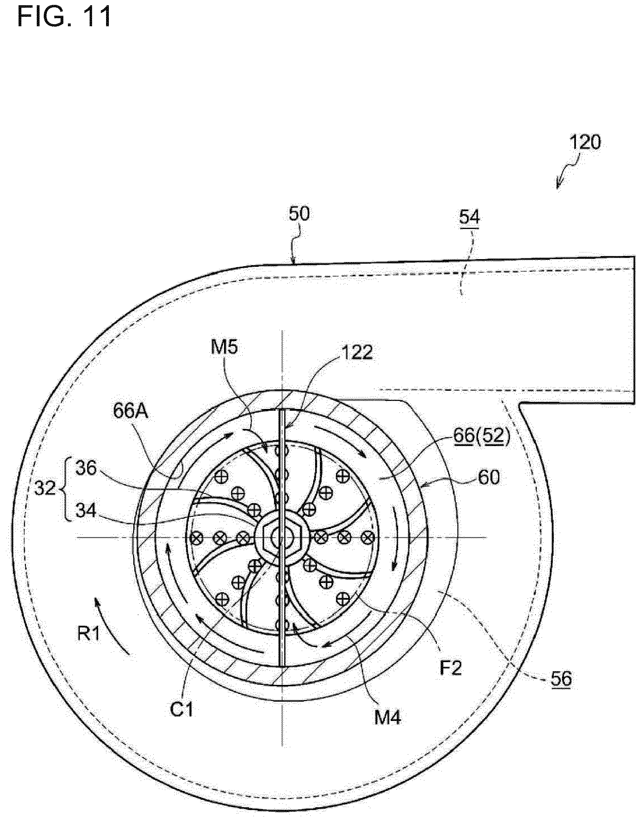

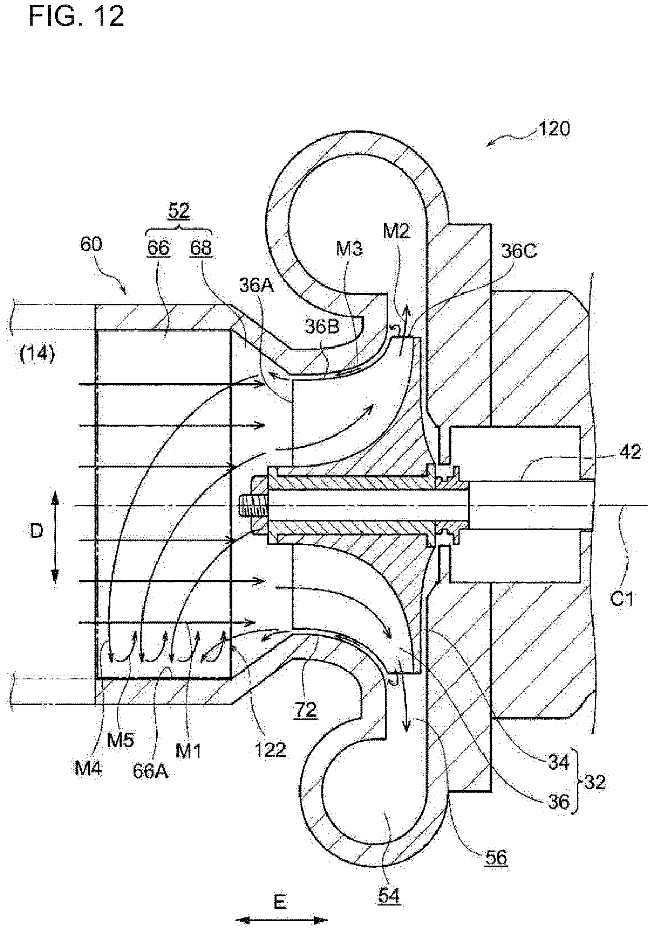

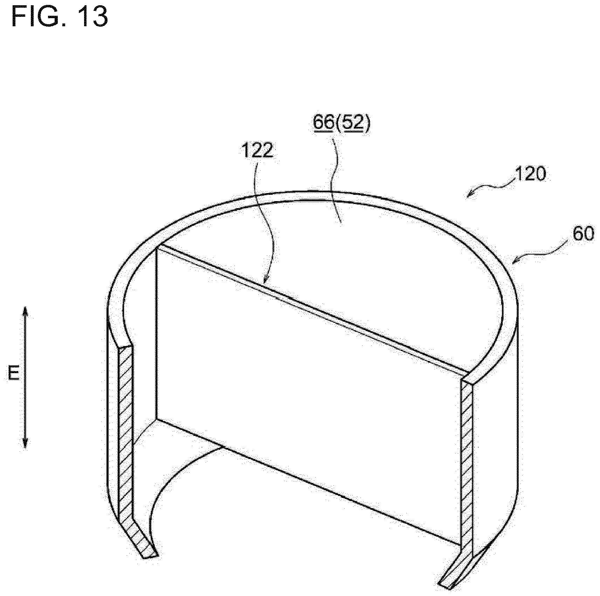

Referring to FIGS. 11, 12, and 13 showing the centrifugal compressor 120, a flat flow straightening plate 122 is provided in the inlet passage 66 of the centrifugal compressor 120. The plate surfaces of the flow straightening plate 122 face in the radial direction. The flow straightening plate 122 is disposed so as to pass through the rotation center C1 and bisect the inlet passage 66 as viewed in the axial direction (FIG. 11). The dimensions of the flow straightening plate 122 in the axial direction are constant (FIGS. 12 and 13). The rest of the structure of the centrifugal compressor 120 is substantially the same as that of the centrifugal compressor 30.

The following will describe the function of the centrifugal compressor 100 when the flow rate of air flowing into the impeller 32 is small (e.g., less than a threshold flow rate). In the case when the flow rate of air flowing into the impeller 32 is small, the pressure ratio of the centrifugal compressor 100 relative to the flow rate of air in this case is greater than a situation when the flow rate of air flowing into the impeller 32 is large (e.g., satisfies a threshold flow rate).

As shown in FIG. 10, the rotating impeller 32 compresses the air (indicated by the arrow L1) that flows through the introduction passage 52 in the axial direction towards the impeller 32 and introduced from the leading edge 36A of the impeller 32. The compressed air is allowed to flow past the base edges 36C of the impeller blades 36 to the diffusion passage 56 that is located outwardly in the radial direction. As described above, the magnitude of the pressure ratio of the centrifugal compressor 100 relative to the air flow flowing into the impeller 32 when the flow rate of air flowing into the impeller 32 is small is greater than the pressure ratio when the flow rate of air flowing into the impeller 32 is large.

The air flowing from the base edges 36C of the impeller blades 36 towards the diffusion passage 56, that is located outwardly from the impeller 32 in the radial direction, is divided into two flows of air, namely the air flowing towards the spiral passage 54 (indicated by the arrow L2) and the air flowing back in the reverse direction (indicated by the arrow L3). The air flowing in the reverse direction (indicated by the arrow L3) flows through the clearance 72 between the impeller blades 36 and the housing 50 towards the introduction passage 52.

As shown in FIGS. 9 and 10, the air flowing in the reverse direction flows in a spiral manner along the wall surface 66A of the inlet passage 66 in the rotation direction of the impeller 32 (the arrow R1) as indicated by the arrow L4 and flows out from the inlet passage 66.

The pressure ratio of the centrifugal compressor 100 when the flow rate of air flowing into the impeller 32 is large is less than a pressure ratio when the flow rate of air flowing into the impeller 32 is small. In this case, the size of the impeller 32 is suitable for the flow rate of air. Therefore, no reverse flow of air flowing from the base edges 36C of the impeller blades 36 to the diffusion passage 56 that is located outwardly from the impeller 32 in the radial direction occurs.

The following will describe the function of the centrifugal compressor 120 when the flow rate of air flowing into the impeller 32 is small. In this case, the pressure ratio of the centrifugal compressor 120 relative to the flow rate of air is greater than a pressure ratio when the flow rate of air flowing into the impeller 32 is large.

As shown in FIG. 12, the rotating impeller 32 compresses air (indicated by the arrow M1) that flows through the introduction passage 52 in the axial direction towards the impeller 32 from the side of the leading edge 36A of the impeller 32. The compressed air flows out from the base edges 36C of the impeller blades 36 into the diffusion passage 56 that is located outside of the impeller 32 in the radial direction. As described above, the pressure ratio of the centrifugal compressor 120 when the flow rate of air flowing into the impeller 32 is small is greater than a pressure ratio when the flow rate of air flowing into the impeller 32 is large.

Therefore, the air flowing from the base edges 36C of the impeller blades 36 to the diffusion passage 56 that is located outwardly from the impeller 32 in the radial direction is divided into the air flowing towards the spiral passage 54 (the arrow M2) and the air flowing in the reverse direction (the arrow M3). The air that is directed in the reverse direction (the arrow M3) flows through the clearance 72 between the impeller blades 36 and the housing 50 towards the introduction passage 52.

Furthermore, as shown in FIG. 11, the air that is directed in the reverse direction towards the introduction passage 52 flows along the wall surface 66A of the inlet passage 66 in a spiral manner (the arrow M4) in accordance with the rotation direction of the impeller 32 (the arrow R1). The flat flow straightening plate 122 is provided in the inlet passage 66, so that the air flowing in a spiral manner along the wall surface 66A of the inlet passage 66 is guided by the flow straightening plate 122 and flows towards the rotation center C1 (the arrow M5) as seen in the axial direction.

The air flowing towards the rotation center C1 compresses air flowing in the axial direction towards the impeller 32 (the arrow M1) and towards the rotation center C1 as seen in the axial direction. The air flowing towards the impeller 32 is drawn towards the rotation center C1. Therefore, the pressure of air flowing into the impeller 32 of the centrifugal compressor 120 is greater than a pressure of air in the centrifugal compressor 100.

The pressure ratio of the centrifugal compressor 120 when the flow rate of air flowing into the impeller 32 is large is less than a pressure ratio when the flow rate of air flowing into the impeller 32 is small. The size of the impeller 32 is suitable for the air flow rate. Therefore, the air that flows from the base edge 36C of the impeller blades 36 into the diffusion passage 56, that is located outwardly from the impeller 32 in the radial direction, does not flow in the reverse direction.

The following will describe the function of the centrifugal compressor 30 when the flow rate of air flowing into the impeller 32 is small. The pressure ratio of the centrifugal compressor 30 when the flow rate of air flowing into the impeller 32 is small is greater than a pressure ratio when the flow rate of air flowing into the impeller 32 is large.

As shown in FIG. 2, the rotating impeller 32 compresses the air (the arrow N1) that flows through the introduction passage 52 in the axial direction towards the impeller 32 from the side of the leading edge 36A of the impeller 32, and the compressed air is allowed to flow from the base edge 36C of the impeller blades 36 into the diffusion passage 56 that is located outwardly from the impeller 32 in the radial direction. As described above, the pressure ratio of the centrifugal compressor 30 when the flow rate of air flowing into the impeller 32 is small is greater than a pressure ratio of the centrifugal compressor 30 when the flow rate of air flowing into the impeller 32 is large.

Therefore, the air flowing from the base edge 36C of the impeller blades 36 to the diffusion passage 56, that is located outwardly in the radial direction, is divided into the air flowing into the spiral passage 54 (the arrow N2) and the air flowing in the reverse direction (the arrow N3). The air directed in the reverse direction (the arrow N3) flows through the clearance 72 between the impeller blades 36 and the housing 50 towards the introduction passage 52.

As shown in FIG. 1, the air directed in the reverse direction towards the introduction passage 52 flows in a spiral manner along the wall surface 66A of the inlet passage 66 (the arrow N4) in accordance with the rotation direction of the impeller 32 (the arrow R1). In the centrifugal compressor 30, in which the flow straightening plate 80 having the paired projecting part 82 is provided in the inlet passage 66 and each projecting part 82 has the inclined surface 84, the air flowing in the spiral manner along the wall surface 66A of the inlet passage 66 is guided by the inclined surface 84 so that the air flows along the inclined surface 84 (the arrow N5) as seen in the axial direction.

The air flowing along the inclined surface 84 compresses the air flowing in a spiral manner along the axial direction towards the impeller 32 (the arrow N1). Specifically, the air is compressed downstream of the rotation direction of the impeller 32 in the circumferential direction of the rotary shaft 42. The air flowing towards the impeller 32 is forced in the inclined direction of the inclined surface 84. Therefore, the pressure of the air flowing into the impeller 32 in the centrifugal compressor 30 is greater than a pressure of air in the centrifugal compressor 100.

Since the air flowing towards the impeller 32 is compressed downstream of the rotation direction of the impeller 32, the flow direction of the air flowing towards the impeller 32 is inclined relative to the rotation center C1 so that the downstream of the flow direction coincides with the downstream of the rotation direction of the impeller 32. Thus, the air flows into the impeller 32 and is compressed.

The pressure ratio of the centrifugal compressor 30 when the flow rate of air flowing into the impeller 32 is large is less than a pressure ratio when the flow rate of air flowing into the impeller 32 is small. The size of the impeller 32 is suitable for the air flow rate. Therefore, the air flowing outwardly from the base edge 36C of the impeller blades 36 into the diffusion passage 56, that is located outwardly from the impeller 32 in the radial direction, does not flow in the reverse direction.

The following will describe the surge limit for the centrifugal compressors 30, 10, 120. The surge limits of the centrifugal compressors 30, 100, and 120 were obtained. In the centrifugal compressor 30 having the flow straightening plate 80 and the centrifugal compressor 120 having the flow straightening plate 122, substantially the same results were obtained.

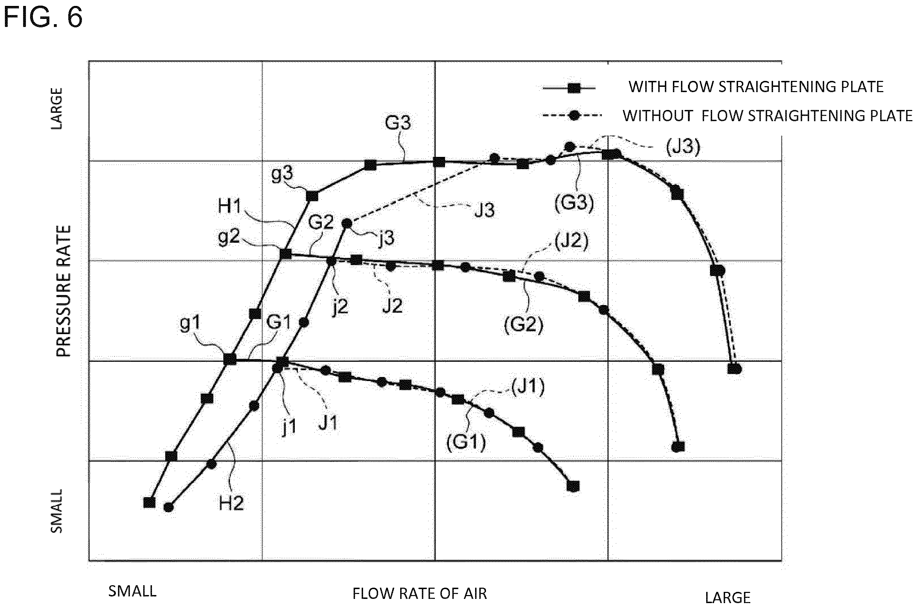

Referring to FIG. 6, the ordinate of the graph represents the pressure ratio of air compressed by the centrifugal compressors 30, 100, and 120 and the abscissa of the graph represents the flow rate [g/sec] of air flowing into the impeller 32. The pressure ratio is obtained by the expression P2/P1, wherein P1 denotes the pressure in the inlet and P2 denotes the pressure in the outlet of the centrifugal compressors 30, 100, and 120. The pressures P1, P2 are measured by a pressure sensor. The air flow rate is measured by a flow rate meter.

As shown in FIG. 6, the solid line G1 of the graph indicates the relationship between air flow rate and pressure ratio when the rotation speed of the impeller 32 is kept constant and the flow rate of air flowing into the impeller 32 is varied in the centrifugal compressors 30, 120.

The broken line J1 indicates the relationship between air flow rate and pressure ratio when the rotation speed of the impeller 32 is kept constant, as in the case of the solid line G1, and the flow rate of air flowing into the impeller 32 is varied in the centrifugal compressor 100.

While the airflow rate was reduced gradually, the airflow rate at which the surging occurs and the pressure ratios were obtained. That is, the airflow rate was reduced until the surging occurred. In the centrifugal compressors 30 and 120, the surging occurred at the point g1 where the air flow rate was smallest. In the centrifugal compressor 100, the surging occurred at the point j1 where the airflow rate was smallest. The surging was regarded to have occurred when the amplitude reading of a vibration meter mounted on the housing 50 satisfied a predetermined value.

In obtaining the solid lines G1, G2, and G3 for the centrifugal compressors 30 and 120, the rotation speed of the centrifugal compressors 30 and 120 for the solid line G2 was set higher than that for the solid line G1 and the rotation speed of the centrifugal compressors 30 and 120 for the solid line G3 was set higher than that for the solid line G2. In the solid line G2, surging occurred at the point g2 where the air flow rate was smallest. In the solid line G3, surging occurred at the point g3 where the air flow rate was smallest.

In obtaining the broken line J2 for the centrifugal compressor 100, the rotation speed of the centrifugal compressor 100 was set at a speed that is the same as that of the centrifugal compressors 30 and 120 for the solid line G2. In obtaining the broken line J3 for the centrifugal compressor 100, the rotation speed of the centrifugal compressor 100 was set at a speed that is the same as that of the centrifugal compressors 30, 120. In the broken line J2, surging occurred at the point j2 where the air flow rate was smallest. In the broken line J3, surging occurred at the point g3 where the air flow rate was smallest.

Evaluation of the solid lines G1, G2, G3 and the broken lines J1, J2, J3 were made at different rotation speeds of the centrifugal compressors 30 and 120 and the centrifugal compressor 100, and the relationship of the airflow rate and the pressure ratio that caused surging were found for the centrifugal compressors 30, 100, and 120.

In the graph of FIG. 6, the solid line H1 presents the surge limit line (hereinafter referred to as the limit line H1) for the centrifugal compressors 30 and 120, and the solid line H2 of the graph presents the surge limit line (hereinafter referred to as the limit line H2) for the centrifugal compressor 100.

In the centrifugal compressors 30 and 120, no surging occurs in the region that is to the right of the limit line H1 or larger air flow side of the limit line H1 in the graph. In the centrifugal compressor 100, no surging occurs in the region that is to the right of the limit line H2 or larger air flow side of the limit line H2 in the graph.

As is apparent from FIG. 6, the limit line H1 is located to the left (smaller air flow rate side) of the limit line H2, which shows that when the air flow rate is small, occurrence of surging in the centrifugal compressors 30 and 120 is more suppressed than as compared with the centrifugal compressor 100.

The following will describe the reason why surging tends to occur when the air flow rate is reduced with the rotation speed of the impeller 32 kept constant.

As described above, when the air flow rate becomes smaller, the air flowing from the base edge 36C of the impeller blades 36 to the diffusion passage 56, that is located outwardly from the impeller 32 in the radial direction, is divided into the air flowing towards the spiral passage 54 and the air flowing in the reverse direction (FIGS. 2, 11, and 12). In other words, the air flowing in one direction is divided into the air flowing towards the spiral passage 54 and the air flowing towards the introduction passage 52. This division of the air causes surging near the diffusion passage 56.

The following will describe the reason why the occurrence of surging is more suppressed in the centrifugal compressors 30 and 120 as compared with the centrifugal compressor 100.

As described above, the pressure of the air flowing into the impeller 32 of the centrifugal compressors 30 and 120 is greater than that of the centrifugal compressor 100. The increased pressure of the air that is flowing into impeller 32 reduces the flow rate of air flowing in the reverse direction in the diffusion passage 56. Therefore, the occurrence of surging in the centrifugal compressors 30 and 120 is suppressed as compared with the centrifugal compressor 100.

The following will describe the compressor efficiency of the centrifugal compressors 30, 100, and 120. The compressor efficiency η [%] may be expressed by the Expression 1.

$$\eta = ((P2/P1)^*(\kappa\text{-}1)/\kappa\text{-}1)/ ((T2/T1)\text{-}1) \ldots \text{Expression 1}$$

In the above Expression 1, P1 denotes the pressure of air in the inlet of the centrifugal compressors 30, 100, and 120. P2 denotes the pressure of air in the outlet of the centrifugal compressors 30, 100, and 120. T1 denotes the temperature of air at the inlet of the centrifugal compressors 30, 100, and 120. T2 denotes the temperature of air in the outlet of the centrifugal compressors 30, 100, and 120. Symbol κ denotes the specific heat ratio of the air flowing into the centrifugal compressors 30, 100, and 120. The pressures P1 and P2 are measured by pressure sensors and the temperatures T1 and T2 are measured by temperature sensors.

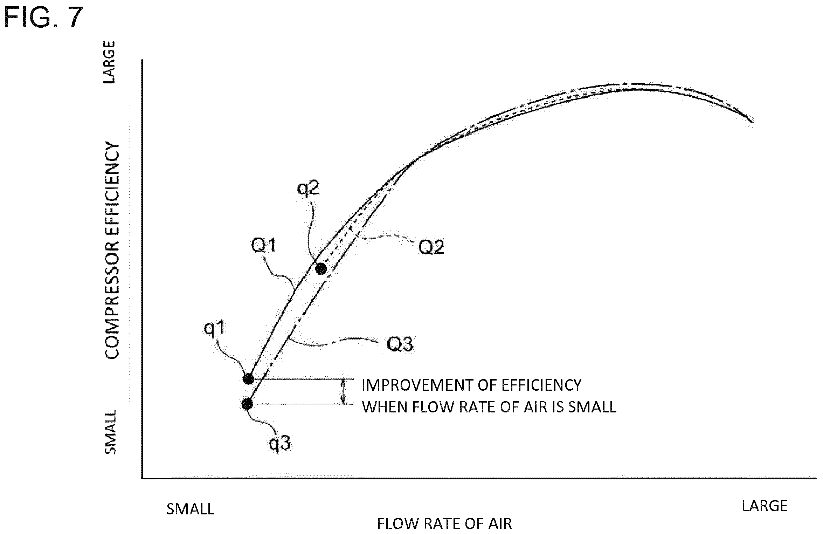

Referring to FIG. 7, the ordinate of the graph represents the compressor efficiency [%] of the centrifugal compressors 30, 100, and 120 and the abscissa of the graph represents the flow rate [g/sec] of air flowing into the impeller 32.

The solid line Q1 in the graph of FIG. 7 shows the compressor efficiency that varies with the flow rate of air flowing into the impeller 32 in the centrifugal compressor 30. The surging occurred at the point q1 where the air flow rate was smallest. The broken line Q2 of the graph indicates the compressor efficiency that varies with the flow rate of air flowing into the impeller 32 in the centrifugal compressor 100. The surging occurred at the point q2 where the air flow rate was smallest. The dashed line Q3 of the graph shows the compressor efficiency that varies with the flow rate of air flowing into the impeller 32 in the centrifugal compressor 120. The surging occurred at the point q3 where the air flow rate was smallest.

As appreciated from the graph shown in FIG. 7, as with the case described with reference to the graph shown in FIG. 6, the surge limit in the centrifugal compressors 30 and 120 occurred on the left side of the graph, where the air flow rate is smaller, as compared with the surge limit in the centrifugal compressor 100.

The centrifugal compressors 30 and 120 exhibit substantially the same performance against surging. The following will compare the compressor efficiency of the centrifugal compressor 30 with that of the centrifugal compressor 120.

As appreciated from FIG. 7, the centrifugal compressor 30 has a higher compressor efficiency at the point q1 where the air flow rate is smallest than as compared to the centrifugal compressor 120 at the point q3 where the airflow rate is smallest.

The following will describe a reason for the higher compressor efficiency of the centrifugal compressor 30 when the flow rate of air flowing into the impeller 32 is small, as compared with the centrifugal compressor 120.

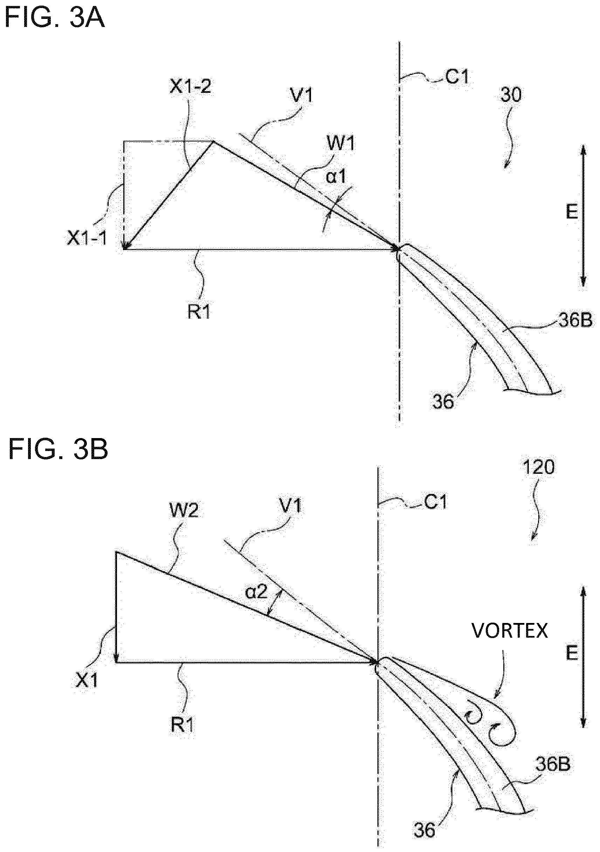

Referring to FIG. 3A, the air flow around the impeller blade 36 of the centrifugal compressor 30 is shown. Referring to FIG. 3B, air flow around the impeller blade 36 of the centrifugal compressor 120 is shown.

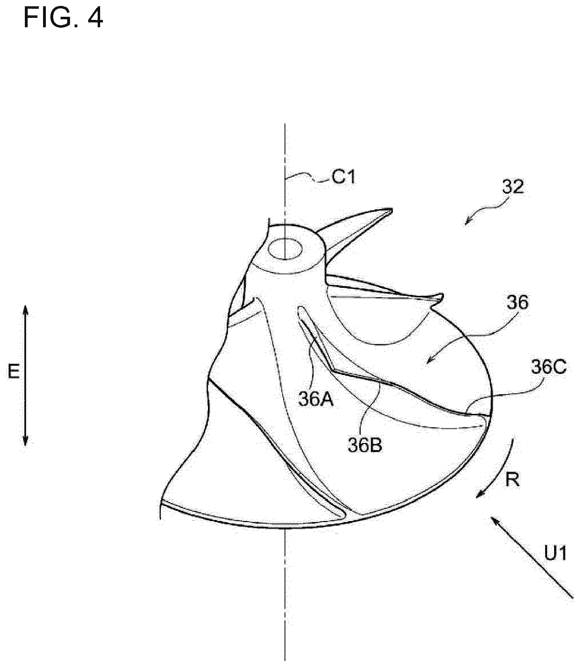

Specifically, FIGS. 3A and 3B show the curved edge 36B of the impeller blade 36 as seen in the direction of the arrow U1 (in the radial direction) shown in FIG. 4.

In FIG. 3A, the vector R1 represents the flow direction and the speed of the air applied to the impeller blade 36 due to the rotation of the impeller 32. The vector X1-1 shows the apparent flow direction (the arrow N1 in FIG. 2) and the speed of air flowing towards the impeller blades 36 when the flow rate of air flowing into the impeller 32 is small in the centrifugal compressor 30. The vector X1-1 is directed along the axial direction. The vector X1-2 represents the flow direction as seen from the impeller blade 36 side and the speed of the air when the flow rate of air flowing into the impeller 32 is small in the centrifugal compressor 30. The vector X1-2 is inclined relative to the vector X1 as seen in the radial direction because the air (the arrow N5 in FIG. 1) flowing in a spiral manner along the inclined surface 84 compresses the air flowing in the axial direction towards the impeller 32 (the arrow N1 in FIG. 1) and towards the downstream of the rotation direction of the impeller 32.

Thus, when the flow rate of air flowing into the impeller 32 of the centrifugal compressor 30 is small, the vector R1 and the vector X1-2 are added to the vector W1 as shown in FIG. 3A. The angle formed by the vector W1 and the inclination direction V1, or the inclination direction of the end portion of the impeller blade 36 as seen in the radial direction, is indicated by $\alpha 1$.

In FIG. 3B, the vector R1 represents the flow direction and the speed of air applied to the impeller blade 36 due to the rotation of the impeller 32. The vector X1 shows the flow direction (the arrow M1 in FIG. 12) and the speed of air flowing towards the impeller blades 36 when the flow rate of air flowing into the impeller 32 is small in the centrifugal compressor 120. The vector X1 is directed substantially in the same direction as the vector X1-1 described above. In the centrifugal compressor 120, the air flowing along the flow straightening plate 122 (the arrow M5 in FIG. 11) compresses the air flowing towards the impeller 32 in the axial direction (the arrow M1 in FIG. 11) towards the rotation center C1 (FIG. 11) without compressing in the rotation direction of the impeller 32. Thus, in the centrifugal compressor 120, the flow direction of the air after being compressed is the same as that of the air of the arrow M1.

Thus, the vector W2 in FIG. 3B shows the relative flow direction and the speed of the air flowing towards the impeller blades 36 when the flow rate of air flowing into the impeller 32 is small in the centrifugal compressor 120. The angle formed by the vector W2 and the inclination direction V1 is $\alpha 2$.

Unlike the centrifugal compressor 30, the relative flow direction of the air flowing towards the impeller blades 36 in the centrifugal compressor 120 is not inclined relative to the axial direction (the rotation center C1) as seen in the radial direction. Therefore, as shown in FIGS. 3A and 3B, the angle $\alpha 2$ is larger than the angle $\alpha 1$. In the centrifugal compressor 120, air is divided on the rear side of the impeller blades 36 and vortexes of air occur more easily (FIG. 3B) as compared with the centrifugal compressor 30.

The vortex of air causes the compressor efficiency of the centrifugal compressor 120 to be reduced as compared with the centrifugal compressor 30. In other words, since the vortex of air flowing to the impeller blades 36 hardly occurs on the rear side of the impeller blades 36, the compressor efficiency of the centrifugal compressor 30 increases as compared with the centrifugal compressor 120.

As described above, the occurrence of surging is suppressed in the centrifugal compressor 30 according to the present embodiment and the centrifugal compressor 120 used as the comparative example, as compared with the centrifugal compressor 100 used also as the comparative example. The compressor efficiency of the centrifugal compressor 30 is greater than that of the centrifugal compressor 120.

In other words, the centrifugal compressor 30 can maintain performance against surging and have a greater compressor efficiency as compared with the centrifugal compressor 120.

The projecting part 82 of the flow straightening plate 80 has a plate shape and the inclined surface 84 of the projecting part 82 extends in the axial direction. Therefore, when the flow rate of air flowing towards the impeller 32 is large, disturbances of the flow of air flowing towards the impeller 32 can be suppressed as compared with a centrifugal compressor having a structure in which the inclined surface is inclined relative to the axial direction.

The inclined surface 84 of the flow straightening plate 80 is formed extending from one end 66B to the other end 66C of the inlet passage 66 in the axial direction thereof. Therefore, the air flowing towards the impeller 32 can be effectively compressed and the compressor efficiency can be improved as compared with a centrifugal compressor having a structure in which the inclined surface is formed in a part of the inlet passage 66.

In the turbocharger 10, when the flow rate of air flowing towards the impeller 32 is small, the compressor efficiency of the centrifugal compressor 30 is improved so that compressed air can be supplied effectively to an engine.

Second embodiment

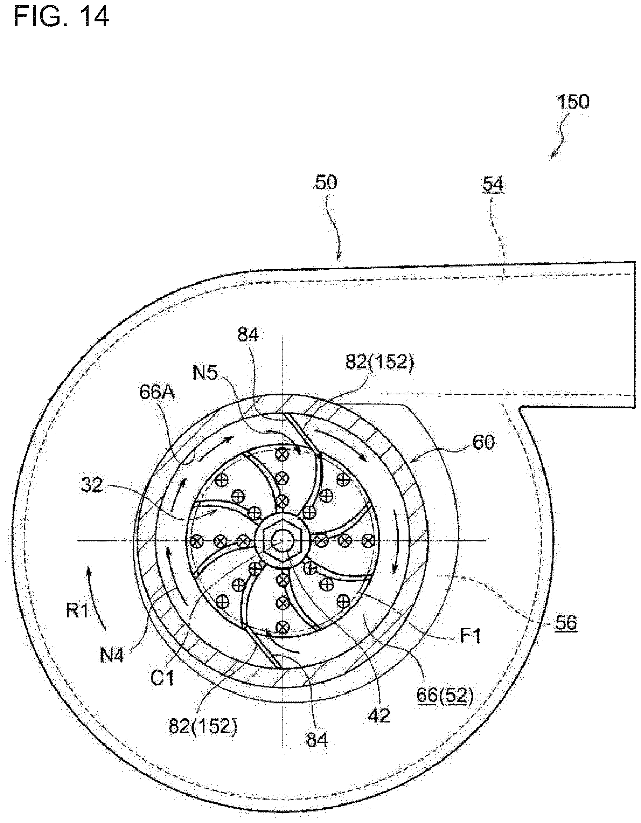

The following will describe an example of a centrifugal compressor and a turbocharger according to a second embodiment of the present disclosure while referring to FIG. 14. In the description of the second embodiment, same reference numerals are used for the common elements or components in the first and the second embodiments, and the description of such elements or components will be omitted. Therefore, the following description will focus on the differences from the first embodiment.

As shown in FIG. 14, the flow straightening plate 152 of the centrifugal compressor 150 according to the second embodiment includes a pair of projecting parts 82 having no connecting portion such as connecting part 86. That is, the flow straightening plate 152 of the centrifugal compressor 150 includes only the paired projecting parts 82 that are disposed on the opposite sides of the impeller 32 relative to the rotation center C1.

The operation of the centrifugal compressor 150 is substantially the same as that of the first embodiment.

Third embodiment

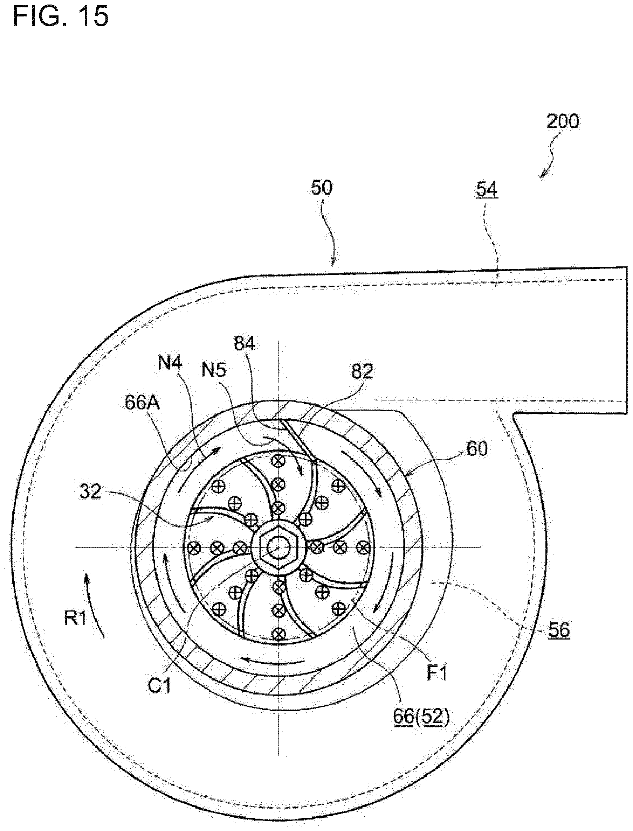

The following will describe an example of a centrifugal compressor and a turbocharger according to a third embodiment of the present disclosure while referring to FIG. 15. In the description of the third embodiment, same reference numerals are used for the common elements or components in the second and the third embodiments, and the description of such elements or components will be omitted. Therefore, the following description will focus on the differences from the second embodiment.

As shown in FIG. 15, the centrifugal compressor 200 according to the third embodiment includes a single projecting part 82.

The operation of the centrifugal compressor 200 is substantially the same as that of the second embodiment.

Fourth embodiment

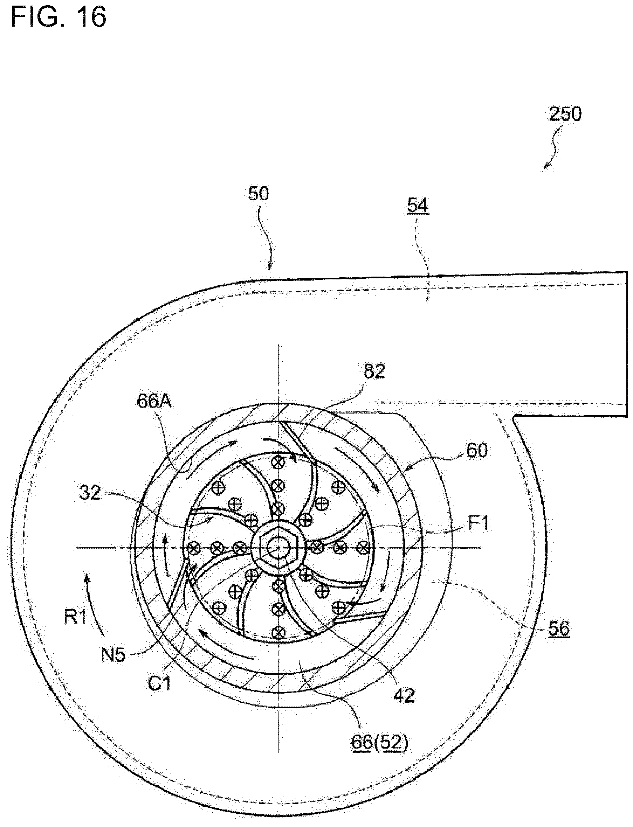

The following will describe an example of a centrifugal compressor and a turbocharger according to a fourth embodiment of the present disclosure while referring to FIG. 16. In the description of the fourth embodiment, same reference numerals are used for the common elements or components in the second and the fourth embodiments, and the description of such elements or components will be omitted. Therefore, the following description will focus on the differences from the second embodiment.

As shown in FIG. 16, a centrifugal compressor 250 according to the fourth embodiment includes three projecting parts 82 that are spaced in the circumferential direction at a predetermined distance.

The operation of the centrifugal compressor 250 is substantially the same as that of the second embodiment.

Fifth embodiment

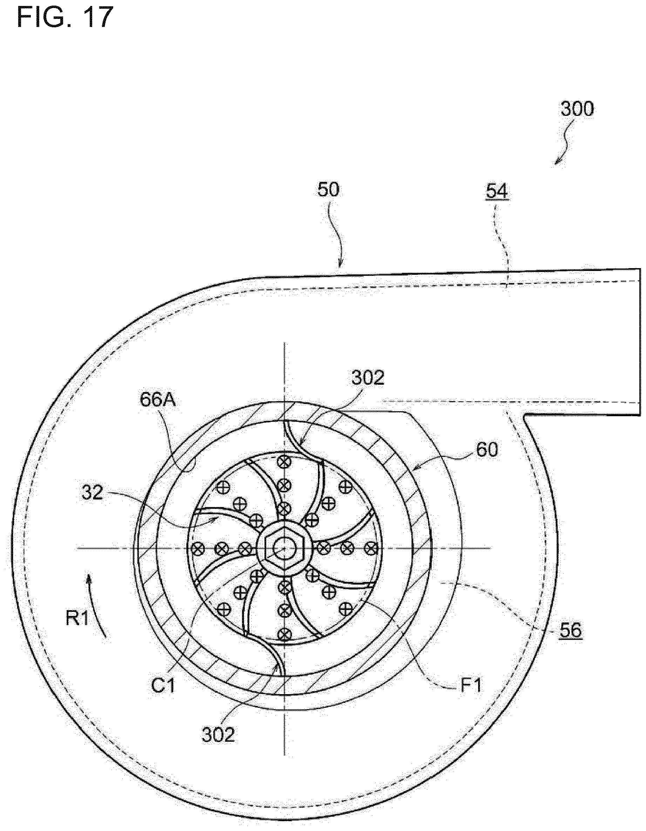

The following will describe an example of a centrifugal compressor and a turbocharger according to a fifth embodiment of the present disclosure referring to FIG. 17. In the description of the fifth embodiment, same reference numerals are used for the common elements or components in the second and the fifth embodiments, and the description of such elements or components will be omitted. Therefore, the following description will focus on the differences from the second embodiment.

As shown in FIG. 17, a centrifugal compressor 300 according to the fifth embodiment includes a pair of projecting parts 302 that are curved and protrude towards an upstream of the rotation direction of the impeller 32 as seen in the axial direction.

The operation of the centrifugal compressor 300 is substantially the same as that of the second embodiment.

The present disclosure has been described in the context of the above embodiments, but it is not limited to the illustrated embodiments. For example, in the above-described embodiments, the flow straightening plate 80 and the housing 50 are formed integrally, but may be formed separately.

In the above-described embodiments, the projecting part 82 has a plate shape, but may have a triangle shape as seen in the axial direction only if the projecting part 82 has an inclined surface. In this case, the operation that the projecting part 82 having a plate shape performs is not performed.

In the above-described embodiments, the projecting part 82 (the inclined surface 84) may extend to the funnel-shaped passage 68.

The impeller may be configured such that a full-length blade and a half-length blade are arranged alternatively in the circumferential direction of the impeller.

**Claims**

1. A centrifugal compressor comprising:

   a rotary blade (36) that is rotatable around an axis (C1) and that is configured to compress gas that flows in an axial direction of the rotary blade (36) and that flows outwardly in a radial direction of the axis (C1);
   an inlet part (60) that extends in the axial direction, that forms an inlet passage (52, 66, 68) to introduce gas to the rotary blade (36), and that includes a circular cross section; and
   a projecting part (82) that projects from a part of a circumferential wall surface of the inlet passage (52, 66, 68), **characterized in that** a top end (84A) of the projecting part (82) is located within an inflow region (F) through which gas flows to the rotary blade (36), and wherein an inclined surface (84) of the projecting part (82) is formed to be inclined so that the top end (84A) of the projecting part (82) is located downstream in a rotation direction of the rotary blade (36) relative to a base end (84B) of the projecting part (82).

2. The centrifugal compressor according to claim 1, **characterized in that** the projecting part (82) has a plate shape, wherein the inclined surface (84) faces upstream in the rotation direction of the rotary blade (36), and wherein the inclined surface (84) extends in the axial direction.

3. The centrifugal compressor according to claim 1 or 2, **characterized in that** the inclined surface (84) is formed in the axial direction from a first end (66B) to a second end (66C) of the inlet passage (52, 66, 68).

4. A turbocharger (10) **characterized by** comprising:

a turbine unit (20) including a turbine rotor (22) rotated by exhaust gas of an engine; and
the centrifugal compressor according to any one of claims 1 through 3, compressing gas supplied to the engine by rotating the turbine rotor (22) to the rotary blade (36).

# FIG. 1

FIG. 2

FIG. 3A

FIG. 3B

FIG. 4

FIG. 5

FIG. 6

EP 3 336 362 A1

FIG. 7

COMPRESSOR EFFICIENCY

LARGE

SMALL

q2

Q1

q1

Q2

Q3

IMPROVEMENT OF EFFICIENCY
WHEN FLOW RATE OF AIR IS SMALL

q3

SMALL

LARGE

FLOW RATE OF AIR

FIG. 8

EP 3 336 362 A1

FIG. 9

# FIG. 10

FIG. 11

FIG. 12

FIG. 13

FIG. 14

# FIG. 15

# FIG. 16

FIG. 17

Europäisches
Patentamt

European
Patent Office

Office européen
des brevets

# EUROPEAN SEARCH REPORT

Application Number

EP 17 20 6662

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2012 149619 A (IHI CORP) 9 August 2012 (2012-08-09) * abstract * * figures 1, 5 * | 1-4 | INV. F04D29/42 F04D29/44 F04D29/68 F04D17/10 |
| X | CN 204 371 782 U (CHANGZHOU E & E TURBO POWER CO LTD) 3 June 2015 (2015-06-03) * abstract * * figures 1-4 * | 1-4 | |
| X | JP 2009 024692 A (TOYOTA MOTOR CORP) 5 February 2009 (2009-02-05) * abstract * * figures 13, 14 * | 1-4 | |
| X | EP 1 452 742 A1 (BORGWARNER INC [US]) 1 September 2004 (2004-09-01) * figures 1, 3 * * paragraphs [0035] - [0036] * | 1,2,4 | |
| X,D | JP 2015 105644 A (TOYOTA CENTRAL RES & DEV) 8 June 2015 (2015-06-08) * abstract * * figures 1, 8C, 8D * | 1-4 | TECHNICAL FIELDS SEARCHED (IPC) F04D F02B |

The present search report has been drawn up for all claims

| Place of search | Date of completion of the search | Examiner |
|---|---|---|
| The Hague | 23 April 2018 | de Verbigier, L |

EPO FORM 1503 03.82 (P04C01)

## ANNEX TO THE EUROPEAN SEARCH REPORT
## ON EUROPEAN PATENT APPLICATION NO.

EP 17 20 6662

This annex lists the patent family members relating to the patent documents cited in the above-mentioned European search report.
The members are as contained in the European Patent Office EDP file on
The European Patent Office is in no way liable for these particulars which are merely given for the purpose of information.

23-04-2018

| Patent document cited in search report | | Publication date | Patent family member(s) | | Publication date |
|---|---|---|---|---|---|
| JP 2012149619 | A | 09-08-2012 | JP | 5720267 B2 | 20-05-2015 |
| | | | JP | 2012149619 A | 09-08-2012 |
| CN 204371782 | U | 03-06-2015 | NONE | | |
| JP 2009024692 | A | 05-02-2009 | JP | 5018400 B2 | 05-09-2012 |
| | | | JP | 5327307 B2 | 30-10-2013 |
| | | | JP | 2009024692 A | 05-02-2009 |
| | | | JP | 2012057634 A | 22-03-2012 |
| EP 1452742 | A1 | 01-09-2004 | DE | 60302542 D1 | 05-01-2006 |
| | | | DE | 60302542 T2 | 10-08-2006 |
| | | | EP | 1452742 A1 | 01-09-2004 |
| JP 2015105644 | A | 08-06-2015 | JP | 6263997 B2 | 24-01-2018 |
| | | | JP | 2015105644 A | 08-06-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015105644 A